# EUROPEAN PATENT APPLICATION

(11) **EP 4 166 870 A1**
(43) Date of publication of application: **19.04.2023**
(21) Application number: 22177855.8
(22) Date of filing: 08.06.2022
(51) Int. Cl.: F25B 31/02, F04B 35/04, H02K 33/16

(54) **PISTON COMPRESSOR UNIT FOR A CRYOGENIC REFRIGERATOR**

(30) Priority: 16.10.2021 US 202117503264
(71) Applicant: Cryo Tech Ltd., 1896500 Meuhad (IL)
(72) Inventor: VEPRIK, Alexander, 2603706 9/29 Tsahal Street, Kiriyat Motzkin (IL)
(74) Representative: Pearl Cohen Zedek Latzer Baratz UK LLP

(57) **Abstract**

A compressor unit of a refrigeration device includes a compression chamber. A piston is configured to be moved back and forth along an axis to alternately compress and decompress a gas in the chamber. An electromagnetic actuator is configured to drive the piston and includes a stator assembly with a driving coil that is coaxial with the axis and two permanent ring magnets that are radially magnetized identically to one another in a plane that is perpendicular to the axis. The ring magnets are located on opposite sides of the driving coil along the axis. A ferromagnetic shaft is elongated parallel to the axis and connected to the piston. When an alternating electrical current flows through the coil, the shaft is magnetized such that the shaft is alternately attracted to one of the ring magnets and repelled by the other to drive the piston back and forth.

## Description

### FIELD OF THE INVENTION

The present invention relates to cryogenic refrigerators. More particularly, the present invention relates to a piston compressor unit of a split Stirling cryogenic refrigerator.

### BACKGROUND OF THE INVENTION

The second law of thermodynamics teaches that spontaneous heat flow occurs from warmer to colder bodies but never in the reverse direction. However, the direction of heat flow may be reversed by applying external work. This principle is utilized in heat pumps and refrigerators, whereupon the heat is absorbed from a cooled location or object and is rejected to a warmer environment. A device that is designed to cool a location or object to cryogenic temperatures is sometimes referred to as a "cryocooler".

In some applications, the cryocooler may be used to maintain an infrared detector of an infrared imager at cryogenic temperatures so as to reduce the noise resulting from a random motion of thermally excited charge carriers.

A cooling device for such an application must often be sufficiently small so as to fit inside an infrared imager or other device into which the detector is incorporated. Typically, such a cooling device is based on the Stirling thermodynamic cycle, in which a gaseous working agent (e.g., helium, nitrogen, argon, or another typically inert or nonreactive gas) is cyclically compressed and expanded within a cantilevered cold finger of an expander unit. A distal end of the cold finger that includes an expansion (cold) chamber is placed in thermal contact with the detector or other object that is to be cooled.

Heat is removed from the cooled object during an expansion phase of the thermodynamic cycle, during which the expanding gaseous working agent performs mechanical work on a pneumatic expansion piston (displacer), containing a porous regenerative heat exchanger. The removed heat along with compression heat are rejected to environment by spontaneous heat transfer (conduction, convection, or radiation) during the compression phase of the cycle. Typically, the heat is rejected from a warm chamber in a base of the cold finger, the temperature of which is higher than that of the environment.

In order to minimize the size of the expansion unit, as well as to reduce possibly disruptive vibrations, the gaseous working agent that effects the heat pumping and that drives the pneumatic displacer is cyclically compressed and expanded in a compression chamber of a separate piston compressor unit. The compression chamber is in direct pneumatic communication with the warm chamber of the expander unit via a conduit or a flexible and configurable transfer line through which the gaseous working agent may flow without obstruction. The expansion chamber of the expander unit is separated from the warm chamber by the spring-supported pneumatic displacer, a resonant frequency of which is determined by the spring constant of the spring and by the mass of the displacer. Typically, the piston within the compressor unit is operated at a frequency that is approximately equal to the resonant frequency of the displacer motion.

### SUMMARY OF THE INVENTION

There is thus provided, in accordance with an embodiment of the invention, a compressor unit of a cryogenic refrigeration device, the compressor unit including: a compression chamber that is connectable via a transfer line to an expander unit of the refrigeration device; a piston that is configured to be moved back and forth along a longitudinal axis to alternately compress and decompress a gaseous working agent in the compression chamber; and an electromagnetic actuator that is configured to drive the piston, the actuator including: a stator assembly that includes a driving coil that is enclosed within a back iron and that is coaxial with the longitudinal axis and two permanent ring magnets that are also coaxial with the longitudinal axis and that are radially magnetized identically to one another in a plane that is substantially perpendicular to the longitudinal axis, the two permanent ring magnets located axially exterior to the driving coil on opposite sides of the driving coil along the longitudinal axis; and a shaft that is elongated parallel to the longitudinal axis and connected to the piston, the shaft including a ferromagnetic material, such that when an alternating electrical current flows through the driving coil, the shaft is magnetized such that the shaft is alternately attracted to one of the two permanent ring magnets and repelled by the other to exert an axial force to drive the piston back and forth.

Furthermore, in accordance with an embodiment of the invention, the piston includes a movable cylinder that is fixed to the shaft.

Furthermore, in accordance with an embodiment of the invention, the movable cylinder is configured to slide over a cylindrical core that is stationary relative to the stator.

Furthermore, in accordance with an embodiment of the invention, the compression chamber is bounded by lateral walls of the movable cylinder, a cap that closes a proximal end of the movable cylinder, and a proximal end of the cylindrical core.

Furthermore, in accordance with an embodiment of the invention, the cylindrical core includes a conduit that extends longitudinally along the cylindrical core parallel to the longitudinal axis.

Furthermore, in accordance with an embodiment of the invention, the conduit is configured to provide pneumatic communication between the compression chamber at a proximal end of the cylindrical core and the transfer line at a distal end of the cylindrical core.

Furthermore, in accordance with an embodiment of the invention, a gap between the movable cylinder and the cylindrical core forms a clearance seal that impedes flow of the gaseous working agent through the gap.

Furthermore, in accordance with an embodiment of the invention, an inner surface of the movable cylinder and an outer surface of the cylindrical core each includes a liner.

Furthermore, in accordance with an embodiment of the invention, the liner includes a ferromagnetic material.

Furthermore, in accordance with an embodiment of the invention, the back iron is a toroidal back iron with a radially inward-facing cylindrical gap.

Furthermore, in accordance with an embodiment of the invention, axial ends of the back iron extend axially outward over outward-facing surfaces of the two permanent ring magnets.

Furthermore, in accordance with an embodiment of the invention, each of the two permanent ring magnets is separated from the back iron by an axial gap.

Furthermore, in accordance with an embodiment of the invention, at least the piston, the shaft and the compression chamber are enclosed in a housing.

Furthermore, in accordance with an embodiment of the invention, the housing is configured to be impermeable to one or more gasses.

### BRIEF DESCRIPTION OF THE DRAWINGS

In order for the present invention to be better understood and for its practical applications to be appreciated, the following Figures are provided and referenced hereafter. It should be noted that the Figures are given as examples only and in no way limit the scope of the invention. Like components are denoted by like reference numerals.
Fig. 1 schematically illustrates a split Stirling cryogenic refrigeration device with a piston compressor unit, in accordance with an embodiment of the present invention.
Fig. 2 is a schematic cross section the compressor unit of the refrigeration device shown in Fig. 1.
Fig. 3 is a schematic cross section of the electromagnetic driving mechanism with of the linear compressor unit shown in Fig. 2.

### DETAILED DESCRIPTION OF THE INVENTION

In the following detailed description, numerous specific details are set forth in order to provide a thorough understanding of the invention. However, it will be understood by those of ordinary skill in the art that the invention may be practiced without these specific details. In other instances, well-known methods, procedures, components, modules, units and/or circuits have not been described in detail so as not to obscure the invention.

Although embodiments of the invention are not limited in this regard, the terms "plurality" and "a plurality" as used herein may include, for example, "multiple" or "two or more". The terms "plurality" or "a plurality" may be used throughout the specification to describe two or more components, devices, elements, units, parameters, or the like. Unless explicitly stated, the method embodiments described herein are not constrained to a particular order or sequence. Additionally, some of the described method embodiments or elements thereof can occur or be performed simultaneously, at the same point in time, or concurrently. Unless otherwise indicated, the conjunction "or" as used herein is to be understood as inclusive (any or all of the stated options).

In accordance with an embodiment of the invention, a split Stirling cryogenic refrigerator (or cryocooler) includes a compressor unit and an expander unit that are connected by a configurable and flexible transfer line. A gaseous working agent (e.g., helium, nitrogen, argon, or another suitable, typically inert, gas) is alternately compressed and decompressed by a piston within the piston compressor unit. The gaseous working agent also occupies regions of the expander. The regions filled by the gaseous working agent within the expander unit are connected to the gaseous working agent within the compression chamber of a piston compressor unit via the transfer line. The transfer line enables unobstructed flow of the gaseous working agent between the expander unit and the compressor unit. Furthermore, the transfer line may enable pneumatic transmission of changes in gas pressure within the compressor unit to the expander unit. The transfer line typically includes a flexible sealed tube. The flexibility of the tube may enable placement of the compressor unit at a location where the compressor unit, or vibrations that are generated by operation of the compressor unit, do not interfere with operation of the cryogenic refrigeration device, or of a device (e.g., infrared detector) that is cooled by the cryogenic refrigeration device.

The expander unit includes a capped cold finger tube that extends distally from a cold finger base that is pneumatically connected to the transfer line. The walls of the cold finger tube and of the cold finger base form a housing that is impermeable to the gaseous working agent. Thus, the gaseous working agent is completely enclosed and isolated from the ambient atmosphere by the housing of the expander unit, the transfer line, and the walls of the compressor unit. A distal (from the base) end of the capped cold finger tube is configured to be placed in thermal contact with an object to be cooled.

A moving displacer assembly is enclosed within the capped cold finger tube. The moving displacer assembly includes a thin walled displacer tube of a material with low heat conductivity that is filled with a regenerative heat exchanger in the form of a porous matrix having a suitable wet surface and heat capacity. The moving displacer assembly is configured to move alternately distally toward the distal cold end of the capped cold finger tube and proximally toward the base of the expander unit. This movement, which effects the removal of heat from the object being cooled and its rejection to the ambient atmosphere, is driven by changes in pressure and volume of the gaseous working agent that are caused by linear motion of a piston within the compressor unit. Forces (e.g., due to changes in pressure on various surfaces, drag forces between the gaseous working agent and the porous matrix of the regenerative heat exchanger, or otherwise) that are created by operation of the compressor unit drive the motion of the moving displacer assembly.

The compressor unit includes an electromagnetic driving mechanism that drives a compressor piston to move back and forth. For example, an end of a piston may form a movable wall of a compression chamber of the compressor unit. The remaining walls of the compression chamber may be formed by static (e.g., cylindrical or otherwise shaped) walls of a tubular sleeve within which the piston is configured to be driven back and forth. In other examples, moving capped cylinder (e.g., cylindrical or otherwise shaped) that is configured to be driven back and forth over a static coaxial pillar-like piston element may form a movable section of walls of the compression chamber.

The compression chamber also is open to the transfer line that pneumatically links the compressor unit to the expander unit. The motion of the piston may cause changes in the volume and pressure of the gaseous working agent within the compression chamber, which may be pneumatically transmitted to the expander unit via the transfer line. The piston and compression chamber are located in an interior space or bore of the electromagnetic driving mechanism.

The surfaces of the piston and the structure (e.g., pillar or sleeve) that form the remainder of the compression chamber are tightly matched so as to form a clearance seal that impedes or prevents leakage of the gaseous working agent out of the compression chamber into the back volume of the compressor unit.

The electromagnetic driving mechanism includes a stator assembly and a coaxial and movable ferromagnetic tubular shaft, e.g., constructed of or containing soft magnetic iron or another ferromagnetic material exhibiting high magnetic saturation (e.g., in excess of 2.4 T) and low alternating current core losses (e.g., below 2.7 W/kg at 100 Hz - such as sintered alloy Permandur49 (TM) or Hyperco 50A (TM)).

The stator assembly includes a driving coil that coaxially surrounds the bore and the movable ferromagnetic shaft. The driving coil is enclosed by a back iron made of a soft magnetic alloy and is axially situated along the longitudinal axis between two identically radially magnetized permanent magnets. The movable ferromagnetic shaft is located radially interior to, e.g., within a bore of, the stator assembly, an outer lateral dimension (e.g., diameter, width, major axis, or other lateral dimension) of the movable ferromagnetic shaft being less than an inner lateral dimension of the stator bore.

The movable ferromagnetic shaft is not permanently magnetized. The movable ferromagnetic shaft may be magnetized by a superposition of permanent and alternating electromagnetic fields that may be created by the stator assembly. The movable ferromagnetic shaft is movable back and forth within a central bore of the stator assembly, parallel to a central longitudinal axis of the bore. The moving piston or moving cylinder is fixed to, or incorporated within, the ferromagnetic shaft. The ferromagnetic shaft is elongated parallel to the longitudinal axis such that the movement of the ferromagnetic shaft is parallel to the elongated dimension of the ferromagnetic shaft.

The axial motion of the movable ferromagnetic shaft may result from the superposition of electromagnetic fields that are created by permanent magnets and alternating electrical driving current that flows through the driving coil. For example, the electromagnetic field that is generated by the driving coil may axially magnetize the movable ferromagnetic shaft. When axially magnetized, the movable ferromagnetic shaft may be attracted by one of the radially magnetized permanent magnets (e.g., the radially magnetized permanent magnet whose radially inward facing face is magnetically polarized oppositely to the nearest axial end of the movable ferromagnetic shaft) while repelled by the other (e.g., the radially magnetized permanent magnet whose radially inward facing face is magnetically polarized identically to the nearest end axial of the movable ferromagnetic shaft). Thus, the movable ferromagnetic shaft is driven in one axial direction. When the direction of the driving current is reversed, e.g., to reverse the axial magnetization of the movable ferromagnetic shaft, the attractive and repulsive forces on the movable ferromagnetic shaft are reversed, driving the movable ferromagnetic shaft in the opposite axial direction.

Since the movable ferromagnetic actuator is fixed to the moving piston or cylinder, the driving current through the driving coil may drive the piston or cylinder back and forth along, or parallel to, the longitudinal axis within the stator bore.

The movable ferromagnetic shaft may be shaped so as to facilitate it propulsion by the driving coil and the radially magnetized permanent magnets. For example, the movable ferromagnetic shaft may be widened at the ends where the movable ferromagnetic shaft is closest to the radially magnetized permanent magnets.

When no current flows through the driving coil of the stator of electromagnetic driving mechanism, the radially magnetized permanent magnets may maintain the movable ferromagnetic shaft (e.g., when unmagnetized or minimally magnetized) at an equilibrium position where the attractive forces exerted on the movable ferromagnetic shaft by the radially magnetized permanent magnets are equal and opposite. Displacing the ferromagnetic shaft from the central position results in a misbalance of attraction forces, whereupon the direction of the resulting force is opposite the direction of displacement. The resulting magnetic spring effect may thus stably hold the ferromagnetic shaft at the central position. The geometrical design of the radially magnetized permanent magnets and the ferromagnetic shaft may be selected such that the dependence of restoring force on displacement may be linear or nonlinear (e.g., softening or hardening).

The driving coil of the stator is enclosed in a toroidal back iron except for an axially central, radially inward-facing band forming an inward-facing cylindrical gap. The back iron may also extend axially outward beyond the driving coil to cylindrically surround the outward facing surfaces of the two radially magnetized permanent magnets. The toroidal back iron may have a rectangular, circular, or otherwise shaped cross section. The back iron is constructed of a ferromagnetic material (e.g., soft iron) and is configured to concentrate the electromagnetic flux that is generated by the driving coil to within the central bore of the static assembly. The back iron may thus contribute to maximizing the magnetization of the movable ferromagnetic shaft and increasing the efficiency of the electromagnetic driving mechanism.

The entire stator assembly may be placed externally to a vessel that encloses the gaseous working agent within compressor unit, thus isolating the gaseous working agent from any potentially contaminating outgassed materials that originate from the driving coil, sintered permanent magnets, adhesives, and encapsulates. In one embodiment, the movable ferromagnetic shaft and the compression chamber may be enclosed (e.g., except for an opening to the transfer line) within a thin-walled compressor housing that is impermeable to the gaseous working agent and any outgassed materials.

The magnetic field that is generated by electrical current flowing through the driving coil (e.g., as visualized by lines of magnetic field flux) is confined to the toroidal back iron. Therefore, the lips of the inward facing gap in the toroidal back iron, where the magnetic field emerges from the toroidal back iron, may function as magnetic poles of the back iron. The polarity of the magnetic poles, as well as the strength of the magnetic field, may be determined by the direction and magnitude of electrical current that flows through the driving coil.

When the amplitude of alternating electrical current in the driving coil is nonzero, the resulting electromagnetic field may cyclically axially displace the movable ferromagnetic shaft so as to move back and forth parallel to the longitudinal axis. Since the movable ferromagnetic shaft is mechanically coupled to the moving piston or moving capped cylinder, the alternating current that flows through the driving coil may cyclically move the piston or capped cylinder back and forth. This may result in a cyclic change in the volume of the compression chamber, and thus the pressure of the gaseous working agent.

In one embodiment, the movable ferromagnetic actuator may include a movable cylinder that is capped at a proximal end (e.g., proximal to the connection to the transfer line) and is open at the distal end of the movable cylinder. For example, the movable cylinder may include a cap, made of lightweight and essentially nonmagnetic material (e.g., titanium, aluminum, or another material), and a cylinder liner, made of a hard and wear-resistant material (such as a ceramic, tool steel, or another wear-resistant material).

In one example, the outer wall of the movable cylinder is bonded to the inward-facing wall of a longitudinal bore within the movable ferromagnetic shaft.

The inner surface of the cap at the proximal end of the movable cylinder functions as the piston surface. The movable cylinder fits tightly over a stationary cylindrical piston core that is fixed and stationary relative to the stator. The tight fit is such that a gap between the inner surface of the movable cylinder and the outer surface of the stationary cylindrical piston core is sufficiently small so as to form a clearance seal to impede flow of the gaseous working agent through the gap. In some cases, the inner surface of the movable cylinder and the outer surface of the stationary cylindrical piston core may be lined with a hard and wear-resistant material, such as a ceramic, tool steel or another suitable material. The liner may be ferromagnetic since a nonmagnetic material separates between ferromagnetic liner and the movable ferromagnetic shaft. Therefore, operation of the electromagnetic driving mechanism is not adversely affected by ferromagnetic liners.

The piston core includes a longitudinal central conduit that extends the entire length of the piston core. A distal end of the central conduit is connectable to the transfer line. A proximal end of the central conduit is open to the compression chamber. The compression chamber is bounded by the proximal end of the piston core (e.g., except for the proximal opening of the stationary bore), the walls of the actuator bore (or of an actuator bore lining that line the walls of the actuator bore), and the piston surface that is formed by the inner surface of the cap of the actuator bore (or of a lining).

An inner surface of the movable cylinder is configured to slide axially along and over the outer surface of the piston core during operation of the electromagnetic driving mechanism. The inner surface may fit tightly over the outer surface with a radial gap that is sufficiently small so as to form a clearance seal. The clearance seal is configured to impede leakage of the gaseous working agent from the compression chamber at the proximal end of the piston column to other regions (e.g., within the compressor housing) of the compressor unit.

In other configurations, other arrangements of the piston and compression chamber relative to the electromagnetic driving mechanism are possible. For example, the piston surface and compression chamber may be located distally to the movable ferromagnetic actuator. Other arrangements may be used.

A linear compressor unit, in accordance with embodiments of the present invention, in which radially magnetized magnetic rings form the magnetic spring may be advantageous over other types of compressor units. In particular, a stator assembly of a typical prior art compressor unit with a ferromagnetic member and that utilizes axially magnetized permanent magnets to form the magnetic spring would typically require, in addition to the back iron, two ferromagnetic caps that are axially exterior to the axially magnetized magnets. The axially exterior magnets would, thus, lengthen and add weight to the stator assembly. Thus, a linear compressor unit in accordance with embodiments of the invention may be lighter and more compact than the prior art compressor unit.

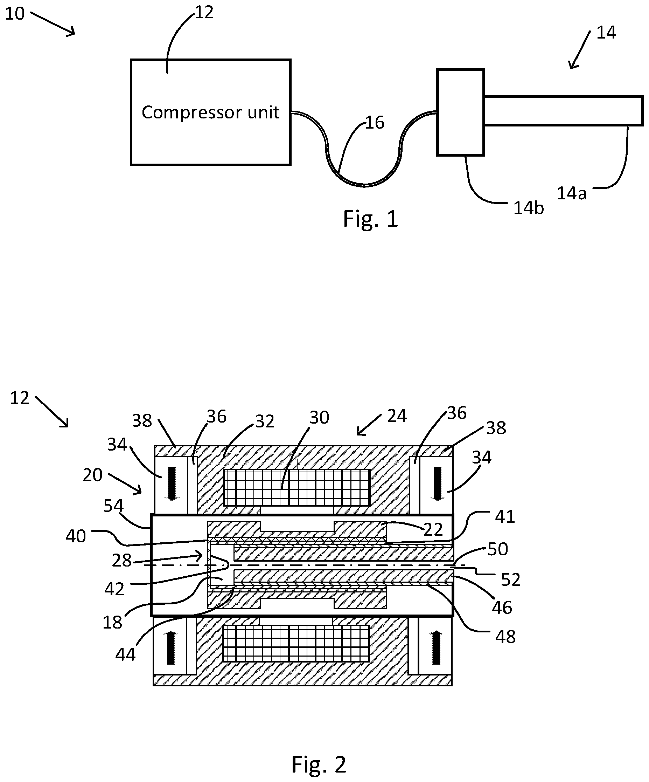

Fig. 1 schematically illustrates a split Stirling cryogenic refrigeration device with a compressor unit, in accordance with an embodiment of the present invention.

Split Stirling cryogenic refrigeration device 10 includes compressor unit 12 and expander unit 14. A gaseous working agent (such as helium or nitrogen) may be cyclically compressed and decompressed within a compression chamber 18 (Fig. 2) of compressor unit 12. The gaseous working agent in compressor unit 12 is in direct pneumatic communication with expander base 14b of expander unit 14 via flexible transfer line 16. Cold finger 14a of expander unit 14, e.g., a distal end of cold finger 14a, may be placed in thermal contact with an object that is to be cooled.

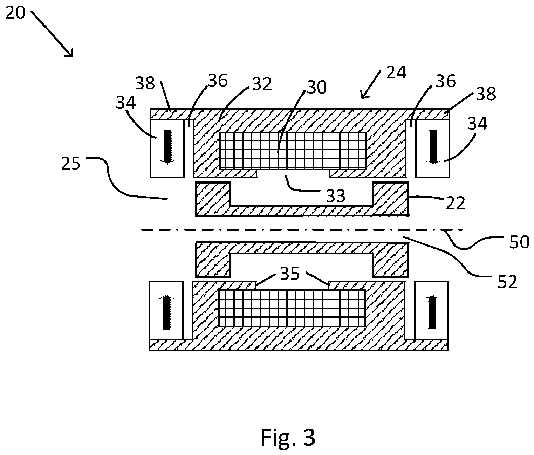

Fig. 2 is a schematic cross section the compressor unit of the refrigeration device shown in Fig. 1. Fig. 3 is a schematic cross section of the electromagnetic driving mechanism with a ferromagnetic actuator of the linear compressor unit shown in Fig. 2.

In the example shown, compressor unit 12 is considered to be azimuthally or rotationally symmetric about longitudinal axis 50. In other examples, other symmetries may be applied (e.g., rotational symmetry at a finite number of azimuthal orientations, e.g., separated by fixed angles of rotation, or other symmetry).

Compressor unit 12 includes electromagnetic actuator 20 to drive piston assembly 28. Movable components of piston assembly 28 (e.g., movable cylinder 40 with piston surface 42, and movable cylinder liner 41) are fixed to ferromagnetic shaft 22 of electromagnetic actuator 20. Stationary components of piston assembly 28 (e.g., stationary cylindrical piston core 46 and piston core liner 48) are fixed relative to stator assembly 24 of electromagnetic actuator 20.

Electromagnetic actuator 20 is configured to move ferromagnetic shaft 22, and other components of piston assembly 28 that are attached to ferromagnetic shaft 22, axially, e.g., parallel to longitudinal axis 50, back and forth within piston assembly housing 54 within compressor unit 12. Ferromagnetic shaft 22 includes a ferromagnetic material such as soft iron or another ferromagnetic material that exhibits high permeability values at very high magnetic flux densities, low magnetic coercivity (hysteresis), and high electrical resistance. Ferromagnetic shaft 22 is elongated in a dimension that is parallel to longitudinal axis 50.

The axial motion of piston assembly 28 moves piston surface 42 distally toward and proximally away from stationary cylindrical piston core 46. Compression chamber 18 is bound proximally by piston surface 42, laterally by lateral cylindrical walls of movable cylinder 40 (or by a movable cylinder liner 41 that is fixed to an inner surface of movable cylinder 40), and distally by a proximal end of stationary cylindrical piston core 46. Thus, the axial back-and-forth motion of piston surface 42 alternately decreases and increases the volume of compression chamber 18.

The portion of stationary cylindrical piston core 46 that forms the distal end of compression chamber 18 includes a proximal end of central bore 52. Conduit 52 extends longitudinally along the length of stationary cylindrical piston core 46, e.g., along or parallel to longitudinal axis 50. An opening at a distal end of conduit 52 may be connected to flexible transfer line 16. Thus, the gaseous working agent that fills compression chamber 18 is in pneumatic communication via flexible transfer line 16 with the gaseous working agent within expander unit 14. Movement of piston surface 42 thus effects changes in gas pressure and volume of the gaseous working agent in compression chamber 18. The changes in gas pressure may be pneumatically communicated to the gaseous working agent within expander unit 14.

Electromagnetic actuator 20 includes stator assembly 24, which is fixed relative to compressor housing 54, and ferromagnetic shaft 22, which is movable relative to stator assembly 24 parallel to an elongated dimension of ferromagnetic shaft 22. Alternating electromagnetic fields that are generated by stator assembly 24 may axially drive ferromagnetic shaft 22.

Stator assembly 24 includes driving coil 30 that is wound about cylindrical space 25 at the center of stator assembly 24 and whose axis coincides with longitudinal axis 50. Two permanent ring magnets 34 are located at opposite axial ends of driving coil 30. Both permanent ring magnets 34 are identically radially magnetized such that the inward-facing surface (e.g., the surface that faces longitudinal axis 50) of both permanent ring magnets 34 presents identical magnetic poles.

Driving coil 30 is enclosed in toroidal back iron 32 except within cylindrical gap 33, which faces inward toward longitudinal axis 50. In the example shown, driving coil 30, toroidal back iron 32, stationary cylindrical piston core 46, and permanent ring magnets 34 have rectangular cross sections. In other examples, one or more of the cross sections may be otherwise shaped (e.g., oval, polygonal, or otherwise). A rectangular cross section may enable or facilitate efficient electromagnetic coupling between stator assembly 24 and ferromagnetic shaft 22, as well as enable a compact design and placement of components.

Back iron 32 is constructed of a soft ferromagnetic material and is configured to concentrate the electromagnetic flux that is generated by driving coil 30 to within cylindrical space 25 of static assembly 24. The electromagnetic flux is confined to back iron 32. Therefore, lips 35 of cylindrical gap 33, where the electromagnetic flux emerges from back iron 32, may function as magnetic poles of back iron 32. Back iron 32 may thus assist in maximizing the electromagnetic field within cylindrical space 25, and thus in maximizing the magnetization of ferromagnetic shaft 22.

Axial ends 38 of back iron 32 may extend axially beyond the outward-facing surfaces of permanent ring magnets 34. Axial faces of permanent ring magnets 34 may be separated from back iron 32 by gaps 36. This arrangement may serve to facilitate interaction between ferromagnetic shaft 22 and permanent ring magnets 34.

Alternating electrical current that flows through driving coil 30 of stator assembly 24 generate an electromagnetic field that alternately longitudinally magnetizes ferromagnetic shaft 22 in opposite directions parallel to longitudinal axis 50. When ferromagnetic shaft 22 is (temporarily) axially magnetized in one direction, attractive and repulsive forces between the axial ends of ferromagnetic shaft 22 and each of permanent ring magnets 34 produce a net force toward one of the permanent ring magnets 34. For example, the end (e.g., distal or proximal) of ferromagnetic shaft 22 whose current magnetic polarity (north or south) is opposite the identical magnetic polarities of the inward-facing surfaces of permanent ring magnets 34 may be drawn toward the permanent ring magnet 34 at the corresponding end (distal or proximal, respectively) stator assembly 24. Thus, the alternating axial electromagnetic force generated by alternating electrical current flowing through driving coil 30 may drive ferromagnetic shaft 22, and the remainder of movable assembly 28, to move back and forth axially along longitudinal axis 50.

In some examples, axial movement of ferromagnetic shaft 22 may be limited (e.g., by stops, by stationary cylindrical piston core 46, or otherwise) such that longitudinal ends of ferromagnetic shaft 22 are prevented from approaching (e.g., entering the central bore of) either of permanent ring magnets 34.

In the example shown, movable cylinder 40 (e.g., of a non-ferromagnetic material) is attached to ferromagnetic shaft 22 such that movable cylinder 40 moves axially together with ferromagnetic shaft 22 as driven by stator assembly 24. The inward-facing surface of movable cylinder 40 fits over stationary cylindrical piston core 46. Thus, the axial movement of ferromagnetic shaft 22 and attached movable cylinder 40 moves piston surface 42 at the proximal end of movable cylinder 40 alternately toward and away from stationary cylindrical piston core 46. This movement of piston surface 42, in turn, alternately expands and reduces the volume of compression chamber 18, thus cyclically varying the gas pressure and volume of the gaseous working agent within compression chamber 18, conduit 52 of stationary cylindrical piston core 46, flexible transfer line 16, and expander unit 14.

Movable cylinder 40 fits sufficiently closely over stationary cylindrical piston core 46 so as to form a close clearance dynamic seal between movable cylinder 40 and stationary cylindrical piston core 46. The close clearance dynamic seal is configured to prevent or impede motion of the gaseous working agent between the interior of movable cylinder 40 (e.g., compression chamber 18 and pneumatically connected components) and the exterior of movable cylinder 40.

Typically, at least the portions of the inner surface of movable cylinder 40 and the outer surface of stationary cylindrical piston core 46 are lined with movable cylinder liner 41 and piston core liner 48, respectively. The (typically identical) materials of which movable cylinder liner 41 and piston core liner 48 are formed are selected to be sufficiently hard and durable so as to resist wear during the alternating motion of movable cylinder 40 over stationary cylindrical piston core 46. Thus, a long-lasting close clearance dynamic seal may be formed between movable cylinder liner 41 and piston core liner 48.

Piston assembly 28 may be sealed within piston assembly housing 54. Piston assembly housing 54 is configured to isolate piston assembly 28 from stator assembly 24. Piston assembly housing 54 is typically made of a nonmagnetic material that does not interfere with the electromagnetic field that is generated by driving coil 32, or the static magnetic field created by permanent ring magnets 34. Piston assembly housing 54 may be configured to be impermeable to the gaseous working agent and other gasses. Thus, the gaseous working agent may be further isolated by piston assembly housing 54 from potential contamination by materials that are outgassed by driving coil 30 (e.g., by enamel coatings of wires or by release of residual air from hidden air pockets) or by other components of stator assembly 24 or of compressor unit 12.

Other arrangements may be used. For example, permanent ring magnets 34 may be replaced with another arrangement of permanent magnets that result in, or approximate, radial magnetization. For example, each permanent ring magnet 34 may be replaced by one or more bar magnets, trapezoidal magnets, circular sector magnets, or other magnets that that are magnetized in a plane that is perpendicular to longitudinal axis 50. The magnets may be azimuthally distributed about longitudinal axis 50.

Compression chamber 18 that is formed by movable cylinder 40 at a proximal end of ferromagnetic shaft 22 may be replaced by a compression chamber at a distal end of the ferromagnetic shaft. For example, a ferromagnetic shaft with a distal face in the form of solid (e.g., without openings or bores) surface may be configured to move axially within a nonmagnetic cylindrical tube. The distal end of the cylindrical tube opens to, or is connectable to, flexible transfer line 16. Thus, a compression chamber may be formed at the distal end cylindrical tube, with walls of the compression chamber formed by the walls of the cylindrical tube and the distal face of the ferromagnetic actuator. The distal face of the ferromagnetic actuator functions as the piston surface of the compression chamber. (It may be noted that in this configuration, any liners between the ferromagnetic shaft and the cylindrical tube would be nonmagnetic.)

Other variants are possible.

When ferromagnetic shaft 22 is located at an equilibrium position, e.g., approximately equidistant from both permanent ring magnets 34, and when no electrical current flows through driving coil 30, the static magnetic forces between each end of ferromagnetic shaft 22 and the nearest permanent ring magnet 34 may be equal and opposite. Thus, no net axial force is applied to ferromagnetic shaft 22. Electromagnetic actuator 20 may be designed such that axial displacement of ferromagnetic shaft 22 from the equilibrium position may result in a magnetic spring effect that yields an axial restoring force toward the equilibrium position. The dependence of the axial restoring force on displacement of ferromagnetic shaft 22 may depend on factors such as geometry of ferromagnetic shaft 22, permanent ring magnets 34, and back iron 32, including geometry of axial ends 38 and of gaps 36. The resulting magnet spring may be designed to be softening, stiffening, or linear.

Applying electrical current to driving coil 30 may disturb the distribution of the polarizing flux in the magnetic circuit formed by back iron 32, ferromagnetic shaft 22, and permanent ring magnets 34. The disturbance may result in increased magnetic flux at one axial end of electromagnetic actuator 20 and reduced magnetic flux at the other end. The changes in magnetic flux may result in a net axial force that is applied to ferromagnetic shaft 22, the direction of which depends on the direction of the current in driving coil 30.

Different embodiments are disclosed herein. Features of certain embodiments may be combined with features of other embodiments; thus certain embodiments may be combinations of features of multiple embodiments. The foregoing description of the embodiments of the invention has been presented for the purposes of illustration and description. It is not intended to be exhaustive or to limit the invention to the precise form disclosed. It should be appreciated by persons skilled in the art that many modifications, variations, substitutions, changes, and equivalents are possible in light of the above teaching. It is, therefore, to be understood that the appended claims are intended to cover all such modifications and changes as fall within the true spirit of the invention.

While certain features of the invention have been illustrated and described herein, many modifications, substitutions, changes, and equivalents will now occur to those of ordinary skill in the art. It is, therefore, to be understood that the appended claims are intended to cover all such modifications and changes as fall within the true spirit of the invention.

## Claims

1. A compressor unit of a cryogenic refrigeration device, the compressor unit comprising:
a compression chamber that is connectable via a transfer line to an expander unit of the refrigeration device;
a piston that is configured to be moved back and forth along a longitudinal axis to alternately compress and decompress a gaseous working agent in the compression chamber; and
an electromagnetic actuator that is configured to drive the piston, the actuator comprising:
a stator assembly that includes a driving coil that is enclosed within a back iron and that is coaxial with the longitudinal axis and two permanent ring magnets that are also coaxial with the longitudinal axis and that are radially magnetized identically to one another in a plane that is substantially perpendicular to the longitudinal axis, the two permanent ring magnets located axially exterior to the driving coil on opposite sides of the driving coil along the longitudinal axis; and
a shaft that is elongated parallel to the longitudinal axis and connected to the piston, the shaft including a ferromagnetic material, such that when an alternating electrical current flows through the driving coil, the shaft is magnetized such the shaft is alternately attracted to one of the two permanent ring magnets and repelled by the other to exert an axial force to drive the piston back and forth.

2. The compressor unit of claim 1, wherein the piston comprises a movable cylinder that is fixed to the shaft.

3. The compressor unit of claim 2, wherein the movable cylinder is configured to slide over a cylindrical core that is stationary relative to the stator.

4. The compressor unit of claim 3, wherein the compression chamber is bounded by lateral walls of the movable cylinder, a cap that closes a proximal end of the movable cylinder, and a proximal end of the cylindrical core.

5. The compressor unit of claim 3 or claim 4, wherein the cylindrical core comprises a conduit that extends longitudinally along the cylindrical core parallel to the longitudinal axis.

6. The compressor unit of claim 5, wherein the conduit is configured to provide pneumatic communication between the compression chamber at a proximal end of the cylindrical core and the transfer line at a distal end of the cylindrical core.

7. The compressor unit of any of claims 3 to 6, wherein a gap between the movable cylinder and the cylindrical core forms a clearance seal that impedes flow of the gaseous working agent through the gap.

8. The compressor unit of any of claims 3 to 7, wherein an inner surface of the movable cylinder and an outer surface of the cylindrical core each includes a liner.

9. The compressor unit of claim 8, wherein the liner includes a ferromagnetic material.

10. The compressor unit of any of claims 1 to 9, wherein the back iron is a toroidal back iron with a radially inward-facing cylindrical gap.

11. The compressor unit of claim 10, wherein axial ends of the back iron extend axially outward over outward-facing surfaces of the two permanent ring magnets.

12. The compressor unit of claim 10 or claim 11, wherein each of the two permanent ring magnets is separated from the back iron by an axial gap.

13. The compressor unit of any of claims 1 to 12, wherein at least the piston, the shaft and the compression chamber are enclosed in a housing.

14. The compressor unit of claim 13, wherein the housing is configured to be impermeable to one or more gasses.
